# EUROPÄISCHE PATENTANMELDUNG

(11) **EP 1 260 912 A2**
(43) Veröffentlichungstag der Anmeldung: **27.11.2002**
(21) Anmeldenummer: 02010385.9
(22) Anmeldetag: 08.05.2002
(51) Int. Cl.: G06F 17/24, G06F 17/21

(54) **Verfahren und Vorrichtung zum Erstellen von Druckvorlagen**

(30) Priorität: 23.05.2001 DE 10125104
(71) Anmelder: Building Systems Gesellschaft für Systementwicklung und- integration mbH, 50735 Köln (DE)
(72) Erfinder: Schibilla, Frank, 50733 Köln (DE); Marniok, Adam, 51145 Köln (DE); Braun, Norma, 53919 Weilerswist (DE)
(74) Vertreter: von Kirschbaum, Alexander, Dipl.-Ing.

(57) **Zusammenfassung**

Bei einem Verfahren zum Erstellen von Druckvorlagen mit flächenbegrenzten Textfeldern mit einem Computer werden erstellte Textdateien (12) in vorgegebene Textfelder, die in einem Satzdokument (10) enthalten sind, eingelesen. In einem Schritt (14) werden die Positionen der einzelnen Textfelder in der Druckvorlage bzw. dem Satzdokument ermittelt. Mit Hilfe eines Vergleichs (20) zwischen einer Textfeldgröße (16) und einem Platzbedarf (18) der entsprechenden Textdatei (12) werden Überläufe in den einzelnen Textfeldern festgestellt. Diese werden in eine Überlaufliste (22) eingetragen. Mit Hilfe der Schritte (24 - 40) erfolgt eine automatische Anpassung des Textlayouts zur Vermeidung von Textüberläufen.

## Beschreibung

Die Erfindung betrifft ein Verfahren und eine Vorrichtung zum Erstellen von Druckvorlagen mit flächenbegrenzten Textfeldern mit einem Computer.

Zur Erstellung von Katalogen, Werbemitteln u. dgl. werden Satzdokumente verwendet, in denen das Layout der einzelnen Seiten generiert wird. Derartige Seiten weisen Textfelder auf, denen Text zugewiesen werden kann. Die Textfelder sind aufgrund der Layoutgestaltung begrenzt, so dass je Textfeld nur ein begrenzter Raum für Text zur Verfügung gestellt wird. Die Texte werden in Textdateien unabhängig von dem Layout erstellt und in die vorgegebenen Textfelder des Satzdokuments eingelesen. Die Texte werden beispielsweise unabhängig von der Erstellung des Layouts von einem Werbetexter verfasst. Durch das gesonderte Erstellen der Texte ist es ferner möglich, diese auf einfache Weise zu ändern. Beispielsweise erfolgt eine Übersetzung der Texte in eine andere Sprache, wenn es sich um einen Katalog, ein Werbemittel o. dgl. handelt, das in unterschiedlichen Sprachen hergestellt werden soll. Beim Einlesen der erstellten Textdateien in die Textfelder erfolgt in Abhängigkeit von vorgegebenen Layoutparametern eine Ausgestaltung des Textlayouts. Hierbei werden beispielsweise die Schriftart, die Schriftgröße, der Schriftstil, der Buchstabenabstand, der Wortabstand, der Zeilenabstand, der Absatzabstand etc. festgelegt. Diese Layoutparameter können beispielsweise gesondert für Überschriften, Unterüberschriften, Fließtext, Tabellen, Fußnoten u. dgl. definiert sein.

Da bei professionellen Publikationen das Gesamtlayout im Vorfeld geplant wird, sind die Flächen der einzelnen Textfelder begrenzt, so dass für die Textbestandteile nur ein definierter Raum zur Verfügung steht. Hierbei kommt es häufig vor, dass die vorgegebene Fläche des Textfeldes für den einzufügenden Text nicht ausreicht. Der Text muss daher durch Änderungen der Layoutparameter oder ggf. durch Kürzungen von Textpassagen auf das flächenbegrenzte Textfeld angepasst werden. Üblicherweise muss das gesamte Satzdokument nach dem Einlesen der erstellten Textdateien in die vorgegebenen Textfelder manuell durchgeblättert werden, um festzustellen, an welchen Textfeldern ein Textüberlauf stattgefunden hat, d. h. der auf einem Textfeld zur Verfügung stehende Raum für die entsprechende Textdatei nicht ausgereicht hat. Dieser manuelle Prozess ist äußerst zeitaufwendig und fehleranfällig. Da in dem Satzdokument der nicht in das entsprechende Textfeld passende Teil der Textdatei nicht sichtbar ist, können Textüberläufe leicht übersehen werden. Es ist daher erforderlich, jedes Textfeld des Satzdokuments einzeln sehr genau zu überprüfen, um festzustellen, ob ein Überlauf stattgefunden hat. Beispielsweise werden Textüberläufe häufig übersehen, wenn der in dem flächenbegrenzte Textfeld enthaltene Text zufällig mit einem Punkt oder mit einem anderen Satzende endet, so dass die Fläche des Textfeldes scheinbar ausgereicht hat. Der sich an diesem Satz anschließende Teil der Textdatei geht hierbei vollständig verloren. Derartige Fehler werden häufig erst nach dem Herstellen des Werbeprospekts o. dgl. festgestellt. Dies hat zur Folge, dass der gesamte Prospekt neu erstellt werden muss und die hohen Druckkosten erneut anfallen.

Von dem Layoutprogramm "Quark-Express 4.1" ist eine Markierung von Textfeldern bekannt, bei denen ein Überlauf eingetreten ist. Die Software "Quark-Express 4.1" bestimmt mittels einer Laufweitenberechnung, ob bei einem Textfeld ein Textüberlauf stattgefunden hat. Sofern dies der Fall ist, wird das entsprechende Textfeld in dem Satzdokument durch einen roten Punkt markiert. Durch die Markierung ist lediglich die Gefahr verringert, dass Textfelder, bei denen ein Textüberlauf aufgetreten ist, übersehen werden. Es ist jedoch weiterhin erforderlich, das Dokument vollständig durchzublättern, um die entsprechenden Textfelder aufzufinden. Dies ist insbesondere bei langen Dokumenten äußerst zeitaufwendig und führt daher leicht dazu, dass trotz der Markierung einzelne Textfelder übersehen werden. Bereits bei einem einzigen übersehenen Textfeld muss häufig der gesamte Katalog o. dgl. vollständig neu gedruckt werden.

Aufgabe der Erfindung ist es, ein Verfahren und eine Vorrichtung zum Erstellen von Druckvorlagen mit flächenbegrenzten Textfeldern zu schaffen, wobei sichergestellt ist, dass keine Textfelder mit Textüberläufen übersehen werden können.

Die Lösung der Aufgabe erfolgt erfindungsgemäß durch die Merkmale des Anspruchs 1 bzw. 10.

Bei dem erfindungsgemäßen Verfahren werden zunächst die erstellten Textdateien in die vorgegebenen flächenbegrenzten Textfelder eingelesen. Anschließend werden die Positionen der einzelnen Textfelder in der Druckvorlage bzw. dem Satzdokument ermittelt. Gegebenenfalls kann den einzelnen Textfeldern eine Kennung zugeordnet werden, so dass auf einfache Weise ein Bezug zu den entsprechenden Textfeldern möglich ist. Anschließend wird festgestellt, in welchen der einzelnen Textfelder Textüberläufe auftreten. Da erfindungsgemäß auch die Position der einzelnen Textfelder bekannt ist, kann eine Überlaufliste erstellt werden, in der die Position oder die Kennung der Textfelder, bei denen ein Textüberlauf festgestellt wurde, aufgelistet sind. Eine derartige Liste kann beispielsweise vom Benutzer des erfindungsgemäßen Verfahrens ausgedruckt werden. Mit Hilfe der vorliegenden Liste können somit die einzelnen Textfelder, deren Position aus der Überlaufliste entnommen werden kann, nacheinander manuell bearbeitet werden, indem die Layoutparameter verändert werden. Die Positionsangabe und/oder die Kennung kann hierbei beispielsweise eine Seitenzahl enthalten. Es ist somit für den Benutzer äußerst einfach, die entsprechenden Textfelder aufzufinden.

Ferner ist ein Übersehen von Textfeldern ausgeschlossen. Insbesondere ist es möglich, nach der Durchführung der Änderungen eine erneute automatische Überprüfung durchzuführen. Wenn sämtliche Textüberläufe behoben wurden, muss die Überlaufliste leer sein.

Vorzugsweise ist die Überlaufliste mit den einzelnen Textfeldern, die in der Überlaufliste aufgelistet sind, verknüpft. Aufgrund dieser softwaremäßigen Verknüpfung zu den relevanten Textfeldern ist es beispielsweise möglich, in der Überlaufliste ein Textfeld, dessen Layoutparameter angepasst werden sollen, anzuklicken. Durch das Anklicken wird beispielsweise unmittelbar das entsprechende Textfeld angezeigt und kann bearbeitet werden. Zusätzlich und anstatt der Anzeige des entsprechenden Textfeldes kann eine Layoutparameterliste angezeigt werden, in der auf einfache Weise Layoutparameter wie die Schriftgröße u. ä. angepasst werden können. Hierbei können die Veränderungsmöglichkeiten der Layoutparameter für den Benutzer begrenzt sein, so dass beispielsweise die Schriftgröße einer Hauptüberschrift nicht kleiner als ein vorgegebener Grenzwert gewählt werden kann. Ferner kann dem Benutzer eine Hierarchie der Layoutparameter vorgegeben werden, so dass zur Anpassung des Textlayouts bestimmte Parameter bevorzugt geändert werden, bei denen die Änderungen beispielsweise durch das menschliche Auge am wenigsten sichtbar sind, so dass die Änderungen nicht auffallen. In einer derartigen Hierarchie der Layoutparameter können einzelne Layoutparameter auch an unterschiedlichen Stellen der Hierarchie häufiger auftauchen. Beispielsweise kann folgende Hierarchie vorgegeben sein:
- 1.: Verkleinern der Schriftgröße der Hauptüberschrift von 18 auf 17;
- 2.: Ändern des Zeilenabstandes im Fließtext um einen Punkt;
- 3.: Ändern der Schriftgröße der Hauptüberschrift auf 16,5 Punkt.

Eine derartige hierarchische Ordnung hat den Vorteil, dass eine für den Benutzer beispielsweise sichtbare Änderung der Hauptüberschrift auf eine Größe von 16,5 Punkt erst erfolgt, wenn eine Änderung des Zeilenabstands beim Fließtext nicht ausgereicht hat, um den gesamten Text in dem flächenbegrenzten Textfeld unterzubringen.

Zur Erfassung der Textüberläufe ist es bei Satzprogrammen, die über eine Programmierschnittstelle verfügen, möglich, programminterne Meldungen abzufragen. Sofern das entsprechende Satzprogramm eine programminterne Meldung über Textüberläufe enthält, kann diese ausgelesen werden. Diese ausgelesene Kennzeichnung wird sodann mit der ermittelten Position des entsprechenden Textfeldes verknüpft und in der Überlaufliste aufgelistet. In bekannten Identifikationsroutinen, die in Satzprogrammen integriert sind, identifizieren diese jedoch bisweilen Textüberläufe, die tatsächlich nicht vorhanden sind. Dies tritt beispielsweise auf, wenn am Ende eines Textes versehentlich ein Zeilenumbruch enthalten ist oder am Ende eines Texte unterschiedliche Leerzeichen vorhanden sind. Da jedes Schriftzeichen nicht nur aus dem sichtbaren Teil besteht, sondern einen nicht sichtbaren Rahmen um sich herum hat, durch die beispielsweise der übliche Abstand zwischen zwei Buchstaben bestimmt wird, kann ein Teil dieser Rahmenbegrenzung über den Textrahmen in Form eines Überhangs hinausragen, obwohl das Schriftzeichen selbst noch vollständig innerhalb des Textrahmens angeordnet ist. Dies führt bei bekannten Identifikationsroutinen fälschlicherweise zu der Anzeige eines Textüberlaufs, der tatsächlich jedoch nicht vorhanden ist.

Bei einer bevorzugten Ausführungsform der Erfindung werden die Textüberläufe festgestellt, indem die Textfeldgrößen der einzelnen Textfelder bestimmt werden und mit dem Platzbedarf der entsprechenden Textdateien verglichen werden. Hierbei ist das Auftreten der vorstehend beschriebenen Fehlermöglichkeiten vermieden. Ferner hat dieses Vorgehen den Vorteil, dass das Feststellen eines Überlaufs auch unabhängig von dem Satzdokument erfolgen kann. Es ist somit nicht erforderlich, nach Änderung eines Layoutparameters in dem Satzdokument erneut zu überprüfen, ob weiterhin ein Überlauf vorliegt oder nicht. Vielmehr ist es möglich, in einem vom Satzdokument unabhängigen Programm festzustellen, ob eine Änderung eines Layoutparameters ausreichend war, um einen Textüberlauf zu vermeiden. Ein erneutes ggf. mehrfaches Einlesen der Textdateien in das Satzdokument bzw. die Druckvorlage ist nicht erforderlich.

Bei einer weiteren besonders bevorzugten Ausführungsform erfolgt die Anpassung des Textlayouts durch automatisches Verändern mindestens eines Layoutparameters. Nach dem erfindungsgemäßen Verfahren wird nach dem Feststellen eines Textüberlaufs automatisch ein Layoutparameter des entsprechenden Textfeldes geändert. Hierzu kann die Art der Veränderung der Parameter in einer Datei hinterlegt sein, in der die Abfolge der Parameteränderungen vorzugsweise wiederum hierarchisch geordnet ist. Bei dieser erfindungsgemäßen bevorzugten Ausführungsform des Verfahrens wird die Überlaufliste vorzugsweise automatisch abgearbeitet. Die Möglichkeit, die Überlaufliste darzustellen oder auszudrucken, ist daher nur optional und dient zur Kontrolle der von der Software durchgeführten Layoutänderung. Die Änderungen von Layoutparametern kann für die einzelnen in der Überlaufliste enthaltenen Textfelder nacheinander erfolgen. Ebenso ist es möglich, eine parallele bzw. gleichzeitige Bearbeitung sämtlicher oder eines Teils der in der Überlaufliste enthaltenen Textfelder durchzuführen.

Nach der Durchführung eines Anpassungsschrittes d. h. der Änderung vorzugsweise eines einzigen oder miteinander verknüpfte Layoutparameter erfolgt eine erneute Überprüfung, ob weiterhin ein Textüberlauf in dem Textfeld vorhanden ist und ggf. ein erneuter Anpassungsschritt durchgeführt werden muss. Aufgrund des vorstehend beschriebenen bevorzugten Verfahrensschritts zum Feststellen von Textüberläufen durch einen Vergleich der Textfeldgröße und des erforderlichen Platzbedarfs ist es möglich, die erneute Überprüfung des Textüberlaufes unabhängig von dem Satzdokument durchzuführen.

Die Anpassung des Layouts des in den Textfeldern vorhandenen Text durch Veränderung der Layoutparameter erfolgt vorzugsweise in einer hierarchischen bzw. vorgegebenen Reihenfolge der Layoutparameter. Hierdurch ist sichergestellt, dass Layoutparameter, deren Veränderung für den Betrachter am wenigsten wahrzunehmen ist, in entsprechenden Grenzen zuerst geändert werden. Wenn eine Änderung dieser Layoutparameter nicht ausreichend ist, um einen Textüberlauf in dem entsprechendem Textfeld zu vermeiden, erfolgt eine automatische Änderung weiterer Layoutparameter. Vorzugsweise sind je Layoutparameter in Abhängigkeit der Textart (Überschrift, Überschrift-Fließtext) Grenzen vorgegeben innerhalb der eine Änderung der Parameter zulässig ist. Eine weitere Änderung der Parameter erfolgt erfindungsgemäß sodann nicht mehr automatisch, sondern kann nur noch manuell durchgeführt werden.

Erfindungsgemäß wird, wenn sämtliche Layoutparameter bis zu den jeweils vorgegebenen Grenzwerten geändert wurden, von dem Programm vorzugsweise ein Hinweis ausgegeben, dass trotz Ausschöpfung der maximal zulässigen Layoutveränderungen ein Textüberlauf in dem entsprechenden Textfeld nicht behoben werden kann. Der Benutzer hat nunmehr die Möglichkeit, dieses Textfeld durch Änderung weiterer Layoutparameter manuell zu verändern oder eine Kürzung des Textes vorzunehmen. Zusätzlich oder anstatt der vorstehend beschriebenen Begrenzung der Änderungsmöglichkeiten erfolgt vorzugsweise ein Zählen der durchgeführten Anpassungsschritte je Textfeld. Sobald eine festgelegte Anzahl an Anpassungsschritten durchgeführt wurde, erfolgt ein Abbrechen der Layoutveränderung hinsichtlich dieses Textfeldes. Vorzugsweise erfolgt wiederum eine entsprechende Meldung an den Benutzer.

Sobald sämtliche Textfelder, bei denen ein Textüberlauf festgestellt wurde, vorzugsweise vollständig automatisch angepasst wurden und kein Textüberlauf mehr auftritt, erfolgt ein Übermitteln der Druckvorlage an eine Ausgabeeinrichtung wie beispielsweise eine Druckvorrichtung.

Die Erfindung betrifft ferner eine Datenverarbeitungseinrichtung zum Erstellen von Druckvorlagen mit flächenbegrenzten Textfeldern. Die Datenverarbeitungseinrichtung weist eine Texterstellungseinrichtung auf, mit der ein Erstellen von in die entsprechenden Textfelder einzulesenden Textdateien möglich ist. Mit Hilfe der Texterstellungseinrichtung kann beispielsweise durch einen Werbetexter der entsprechende Werbetext eingegeben werden. Ferner weist die Datenverarbeitungseinrichtung eine Positionsbestimmungseinrichtung zum Bestimmen der Position jedes einzelnen Textfeldes in der Druckvorlage auf. Mit Hilfe einer erfindungsgemäßen Feststelleinrichtung können Textüberläufe in den einzelnen Feldern festgestellt werden. Ferner weist die erfindungsgemäße Datenverarbeitungseinrichtung eine Auswerteeinrichtung auf, mit Hilfe der eine Überlaufliste erstellt wird, in der die Position der festgestellten Textfelder aufgelistet sind.

Vorzugsweise erfolgt das Feststellen von Textüberläufen mit Hilfe der Feststelleinrichtung, wie vorstehend beschrieben, durch einen Vergleich der Textfeldgrößen der einzelnen Textfelder mit dem Platzbedarf der entsprechenden Textdatei.

Die Anpassungseinrichtung, durch die vorzugsweise ein automatisches Anpassen der Layoutparameter in vorgegebenen Grenzen erfolgt, ist vorzugsweise derart ausgebildet, dass die vorstehend beschrieben und insbesondere die bevorzugten Verfahrensschritte mit der Anpassungseinrichtung durchgeführt werden können.

Vorzugsweise weist die Datenverarbeitungseinrichtung eine Ausgabeeinrichtung wie eine Druckvorrichtung zur Ausgabe einer übermittelten Druckvorlage auf.

Das vorstehend beschriebene Verfahren sowie die erfindungsgemäße Datenverarbeitungseinrichtung sind insbesondere zur Erstellung von Druckvorlagen aus fremderfassten Texten einsetzbar. Fremderfasste Texte sind beispielsweise von Werbetextern o. dgl. erstellte Texte, die unabhängig von der Erstellung des Layouts erstellt werden. Ferner kann eine hohe Automatisierung bei gleichzeitiger Erhöhung der Produktionssicherheit erreicht werden. Die Automatisierung hat ferner den Vorteil, dass in kurzer Zeit umfangreiche Dokumente erstellt werden können und das Auftreten von Überläufen, die vom Benutzer übersehen werden können, vermieden ist. Insbesondere eignet sich das erfindungsgemäße Verfahren sowie die erfindungsgemäße Datenverarbeitungseinrichtung auch zum Einfügen von Texten in ein bestehendes Dokument in einer anderen Sprache. Hierbei ist zu berücksichtigen, dass sich der Platzbedarf durch die Übersetzung eines Textes häufig verändert. Ein weiterer Vorteil der Erfindung besteht darin, dass die Korrektur- und Kontrollarbeiten reduziert sind. Insbesondere das aufwendige Durchblättern von Druckvorlagen entfällt.

Nachfolgend wird die Erfindung eines bevorzugten Verfahrensablaufs anhand der anliegenden Zeichnung näher erläutert.

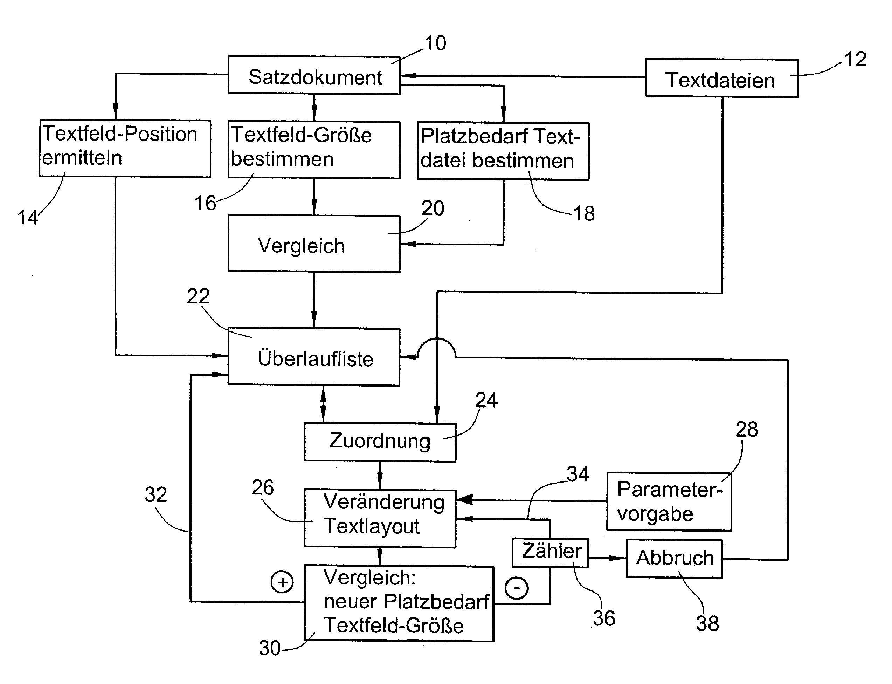

Die Figur zeigt ein schematisches Flussdiagramm eines bevorzugten Verfahrensablaufs.

In ein Satzdokument 10, das eine Vielzahl von flächenbegrenzten Textfeldern sowie beispielsweise Bildfelder u. dgl. aufweist, werden Textdateien 12 eingelesen. Hierbei wird jede Textdatei in ein Textfeld eingelesen. Mit Hilfe des erfindungsgemäßen Verfahrens werden vor oder nach dem Einlesen der Textdateien 12 in Schritt 14 die Textfeld-Positionen bestimmt. Hierbei wird die genaue Lage der einzelnen Textfelder beispielsweise in Bezug auf die Seitenzahlen und die Anordnung auf der Seite ermittelt.

Ebenfalls vor oder nach dem Einlesen der Textdateien 12 erfolgt eine Bestimmung der Textfeld-Größe 16. Nach dem Einlesen der Textdateien 12 erfolgt eine Platzbedarfsbestimmung 18 der Textdateien. Der Platzbedarf der einzelnen Textdateien 12 kann erst nach dem Einlesen das Satzdokument erfolgen, da die Layoutzuweisungen einzelner Textbestandteile wie Überschriften u. dgl. erst beim Einlesen der Textdateien in das Satzdokument 10 erfolgen. Somit kann auch der erforderliche Platzbedarf der Textdateien 12 erst nach dem Einlesen in die in dem Satzdokument 10 vorgesehenen Textfelder erfolgen.

Nach dem Bestimmen der Textfeldgröße 16 sowie des Platzbedarfes 18 erfolgt ein Vergleich dieser beiden Größen. Auf Grundlage des Vergleichs zwischen der Textfeldgröße 16 und dem Platzbedarf 18 der einzelnen Textdateien 12 kann festgestellt werden, ob in einem Textfeld ein Textüberlauf auftritt. Zusammen mit der Textfeldposition 14 wird der in dem Vergleich 20 festgestellte Textüberlauf in eine Überlaufliste 22 eingetragen. In der Überlaufliste 22 kann beispielsweise auch zur Verdeutlichung des entsprechenden Textfeldes die erste Zeile des Textfeldes mit aufgenommen werden.

Mit Hilfe eines Zuordnungsschrittes 24 erfolgt eine Zuordnung zwischen einem in der Überlaufliste 22 enthaltenen Textfeld und der in diesem anzuordneten Textfelddatei 12. In einem Anpassungsschritt 26 erfolgt sodann die Veränderung eines oder mehrerer Layoutparameter. Die Veränderung der Layoutparameter ist in einer Parametervorgabe 28 gespeichert. In der Parametervorgabe 28 ist insbesondere die Hierarchie der veränderbaren einzelnen Parameter hinterlegt. Ferner sind bei Parametern, die in mehreren Schritten verändert werden können, Veränderungsschritte sowie Grenzwerte für eine maximale Veränderung je Parameter hinterlegt. Diese Bedingungen für die Layoutparameter können selbstverständlich für die einzelnen Textbestandteile wie beispielsweise Überschriften, Fließtext u. dgl. unterschiedlich festgelegt sein.

Nach der Durchführung des Anpassungsschrittes 26 erfolgt ein erneuter Vergleich 30 zwischen dem neuen Platzbedarf und der ermittelten Textfeldgröße 16. Sofern dieses Ergebnis positiv ist, d. h. die Textdatei 12 nunmehr vollständig in das Textfeld passt und kein Textüberlauf mehr auftritt, erfolgt eine Rückmeldung 32 an die Überlaufliste 22, in der das entsprechende Textfeld als bearbeitet gekennzeichnet wird.

Sodann erfolgt eine erneute Zuordnung 24 des nächsten in der Überlaufliste 22 aufgeführten Textfeldes mit der dazugehörigen Textdatei 12 und die Schritte 24,26,30 werden wiederholt.

Ist der Vergleich 30 jedoch negativ, d. h. es tritt weiterhin ein Textüberlauf in dem entsprechendem Textfeld auf, wird gemäß dem Pfeil 34 der Schritt 26 wiederholt. Es erfolgt somit ein zweiter Anpassungsschritt 26. Anschließend erfolgt wiederum ein Vergleich 30, der entsprechend positiv oder negativ ausfallen kann.

Bei jedem negativen Vergleich wird ein Zähler 36 um "1" erhöht. In dem Zähler 36 ist eine maximale Anzahl an Anpassungsschritten 26 gespeichert. Sobald diese maximale Anzahl erreicht ist, erfolgt ein Abbruch 38 der Anpassung des Textlayouts. Hierdurch ist sichergestellt, dass die Schritte 26,30 nicht unendlich oft wiederholt werden sondern eine Textanpassung zeitlich begrenzt ist.

Eine weitere Begrenzung besteht darin, dass die Parametervorgaben 28 Grenzen aufweisen. Sobald diese Grenzen erreicht sind, erfolgt ebenfalls ein Abbruch 38 der Textanpassung. Der Abbruch 38 wird vorzugsweise ebenfalls in die Überlaufliste 22 wie durch Pfeil 40 dargestellt, eingetragen. Nach einem Abbruch 40 erfolgt die Bearbeitung des in der Überlaufliste 22 als nächstes aufgeführten Textfeldes.

## Patentansprüche

1. Verfahren zum Erstellen von Druckvorlagen (10) mit flächenbegrenzten Textfeldern mit einem Computer, mit den Schritten:
- Einlesen erstellter Textdateien (12) in vorgegebene Textfelder,
- Ermitteln der Position jedes einzelnen Textfeldes in der Druckvorlage (10),
- Feststellen von Textüberläufen in einzelnen Textfeldern und
- Erstellen einer Überlaufliste (22), in der die Positionen der festgestellten Textfelder aufgelistet sind.

2. Verfahren nach Anspruch 1, bei welchem die Überlaufliste (22) mit den einzelnen Textfeldern verknüpft ist.

3. Verfahren nach Anspruch 1 oder 2, bei welchem die Textüberläufe festgestellt werden, indem die Textfeldgrößen (16) der einzelnen Textfelder bestimmt werden und mit dem Platzbedarf (18) der entsprechenden Textdateien (12) verglichen werden.

4. Verfahren nach einem der Ansprüche 1-3 mit dem Schritt:
Automatisches Verändern mindestens eines Layoutparameters zum Anpassen des Textlayouts eines in der Überlaufliste (22) enthaltenen Textfeldes.

5. Verfahren nach Anspruch 4, bei welchem nach dem Durchführen eines Anpassungsschritts (26) überprüft wird, ob weiterhin ein Textüberlauf in diesem Textfeld vorhanden ist und ggf. ein erneuter Anpassungsschritt (26) durchgeführt wird.

6. Verfahren nach Anspruch 5, bei welchem in den Anpassungsschritten (26) für ein Textfeld die sich verändernden Layoutparameter hierarchisch geordnet sind.

7. Verfahren nach Anspruch 5 oder 6, bei welchem ein Layoutparameter schrittweise bis zu einem vorgegebenen Grenzwert geändert wird und anschließend ein anderer Layoutparameter geändert wird.

8. Verfahren nach einem der Ansprüche 4-7, bei welchem nach Durchlaufen einer festgelegten Anzahl (36) an Anpassungsschritten (26) die automatische Anpassung des entsprechenden Textfeldes abgebrochen wird und die Anpassung des nächsten in der Überlaufliste (22) enthaltenen Textfeldes erfolgt.

9. Verfahren nach einem der Ansprüche 4-8, bei welchem nach der Layoutanpassung sämtlicher festgestellter Textfelder die Druckvorlage (10) an eine Ausgabeeinrichtung übermittelt wird.

10. Datenverarbeitungseinrichtung zum Erstellen von Druckvorlagen (10) mit flächenbegrenzten Textfeldern, mit
einer Texterstellungseinrichtung zum Erstellen von in die entsprechenden Textfelder einzulesenden Textdateien (12),
einer Positionsbestimmungseinrichtung (14) zum Bestimmen der Positionen jedes einzelnen Textfeldes in der Druckvorlage (10),
einer Feststelleinrichtung (16,18,20) zum Feststellen von Textüberläufen in einzelnen Textfeldern und
einer Auswerteeinrichtung zum Erstellen einer Überlaufliste (22), in der die Positionen der festgestellten Textfelder aufgelistet sind.

11. Datenverarbeitungseinrichtung nach Anspruch 10, **dadurch gekennzeichnet, dass** die Feststelleinrichtung (16,18,20) Textüberläufe durch einen Vergleich (20) der Textfeldgrößen (16) der einzelnen Textfelder mit dem Platzbedarf (18) der entsprechenden Textdateien (12) feststellt.

12. Datenverarbeitungseinrichtung nach Anspruch 10 oder 11, **dadurch gekennzeichnet, dass** die Anpassungseinrichtung das Textlayout eines in der Überlaufliste (22) enthaltenen Textfeldes (12) automatisch durch Verändern mindestens eines Layoutparameters anpasst.

13. Datenverarbeitungseinrichtung nach Anspruch 12 oder 13, **dadurch gekennzeichnet, dass** die Anpassungseinrichtung nach dem Durchführen eines Anpassungsschritts (26) überprüft, ob weiterhin ein Textüberlauf vorhanden ist und ggf. einen erneuten Anpassungsschritt (26) durchführt.

14. Datenverarbeitungseinrichtung nach einem der Ansprüche 12-14, **dadurch gekennzeichnet, dass** die Veränderungen der Layoutparameter für jede erneute Durchführung eines Anpassungsschritts (26) hierarchisch geordnet sind.

15. Datenverarbeitungseinrichtung nach einem der Ansprüche 12-15, **dadurch gekennzeichnet, dass** die Anpassungseinrichtung nach Durchlauf einer festgelegten Anzahl (36) von Anpassungsschritten (26) die automatische Anpassung des entsprechenden Textfeldes abbricht und die Anpassung des nächsten in der Überlaufliste (22) enthaltenen Textfeldes erfolgt.

16. Datenverarbeitungseinrichtung nach einem der Ansprüche 10-16, **gekennzeichnet durch** eine Ausgabeeinrichtung zur Ausgabe einer übermittelten Druckvorlage.
